# EUROPÄISCHE PATENTSCHRIFT

(11) **EP 1 642 831 B1**
(45) Veröffentlichungstag und Bekanntmachung des Hinweises auf die Patenterteilung: **09.07.2008**
(21) Anmeldenummer: 05020056.7
(22) Anmeldetag: 15.09.2005
(51) Int. Cl.: B65B 9/20, B65B 51/30

(54) **Verfahren und Vorrichtung zum Bewegen einer Schweissbacke**
Method and apparatus for moving sealing jaws
Procédé et dispositif pour deplacer les mâchoires de scellage

(30) Priorität: 29.09.2004 DE 102004047207
(43) Veröffentlichungstag der Anmeldung: 05.04.2006
(73) Patentinhaber: ROVEMA VERPACKUNGSMASCHINEN GMBH, 35463 Fernwald (DE)
(72) Erfinder: Kammler, Roman, Dr., 67547 Worms (DE); Baur, Walter, Dr., 63584 Gründau (DE)

(56) Entgegenhaltungen:
- EP-A- 0 296 387
- EP-A- 0 764 580
- EP-A- 0 915 015
- US-A- 5 377 474
- US-A- 5 752 370

## Beschreibung

Die Erfindung betrifft ein Verfahren zum Bewegen einer Schweißbacke, insbesondere einer Schweißbacke einer Quersiegelstation einer vertikalen Schlauchbeutelmaschine.

Aus der DE 44 25 207 A, welche ein Verfahren gemäß den Oberbegriff des Anspruchs 1 offenbart, ist es bekannt, eine Schweißbacke einer Quersiegelstation einer vertikalen Schlauchbeutelmaschine entlang einer geschlossenen Bahn zu bewegen. Dabei weist die Bahn einen geraden Abschnitt auf, welcher zum Anliegen an einem zwischen der Schweißbacke und einer zweiten, gegenläufigen Schweißbacke zusammengedrückten Folienschlauches vorgesehen ist. Dabei werden der Folienschlauch und die Schweißbacke in Richtung des geraden Abschnittes mit gleicher Geschwindigkeit weiterbewegt, um den Folienschlauch durch die Wärmeeinwirkung der Schweißbacken innerhalb einer Siegelzeit zu verschweißen. Zwei in senkrecht zueinander verlaufende Richtungen wirkende, die Schweißbacke bewegende Antriebe dienen der Erzeugung einer Umlaufbewegung der Schweißbacke, wobei innerhalb einer Zykluszeit ein vollständiger Backenumlauf erreicht wird.

Das bekannte Verfahren hat den Nachteil, dass bei einer bestimmten Beutellänge stets fest vorgegeben ist, wie viel Prozent der Zykluszeit, d. h. der Zeit für einen 360 Grad-Umlauf der Schweißbacke für die Zeit zur Verfügung steht, in der die Siegelung erfolgt. Diese Siegelzeit, welche im Regelfall die Zeitdauer umfasst, während der die Schweißbacke in Kontakt mit dem Folienschlauch ist, ihn also verschweißt, wird manchmal auch aus maschinentechnischen Gründen auch so definiert, dass sie sowohl die Zeitdauer umfasst, während der die Schweißbacke in einem geringen Abstand vom Folienschlauch entfernt positioniert ist, um diesen vorzuwärmen oder mittels Kühlluft (nach erfolgter Verschweißung) abzukühlen, als auch die Zeitdauer des Andrückens der Schweißbacke längs eines effektiven Siegelweges (Zseff) an den Folienschlauch.

Da der Prozentsatz der Zykluszeit, der für die Siegelzeit (wie sie auch definiert ist) vorgesehen ist, stets konstant ist, werden Beutel jeglicher Länge mit einem festen Prozentsatz, welcher als Siegelzeitfaktor bezeichnet wird, verschweißt. Ebenso werden Folientypen ungeachtet ihrer Stärke und ihrer Struktur (Schichten, Kunststoffarten, Schichtstärken) stets mit einem bestimmten Siegelzeitfaktor verschweißt. Der Siegelzeitfaktor wird dabei in gleicher Weise ungeachtet einer vorgewählten Beutellänge konstant gehalten, da beim bekannten Stand der Technik Koppelglieder zwischen zwei senkecht zueinander wirkenden Antrieben dafür sorgen.

Auch bei einer konstanten Beutellänge wird bei den bekannten Verfahren der Siegelzeitfaktor konstant gehalten, wenn ein Wechsel des Folientyps erfolgt. Dies hat den Nachteil, dass unterschiedliche Folientypen, insbesondere bei höherer Leistung, mit unterschiedlicher Qualität verschweißt werden. Bestimmte Folientypen, die bei hoher Leistung, d. h. geringer Zykluszeit, den konstanten Prozentsatz der Zykluszeit als Siegelzeit erfahren, werden nicht mehr sicher verschweißt, wenn sie an sich eine relativ hohe Wärmeeinbringung in Folge ihrer großen Stärke oder ihres vielschichtigen Aufbaus benötigen. Dem kann zwar technisch abgeholfen werden, indem getriebetechnisch eine andere Kopplungs- oder Kurbeltechnik eingesetzt wird. Soll anschließend aber wieder ein Folientyp verscheißt werden, der eine geringere Wärmeeinbringung genötigt, oder eine kürzere Beutellänge erzeugt werden, so führt der starre, größere Siegelzeitfaktor dazu, dass die Verpackungsleistung verringert ist, da zu viel Siegelzeit vorgesehen ist, welche nun die Zykluszeit verlängert. Je länger die Zykluszeit ist, umso weniger Verschweißungen können pro Minute durchgeführt werden. Bei einer Zykluszeit von 1 sec werden an einer vertikalen Schlauchbeutelmaschine 60 Schlauchbeutel pro Minute quer verschweißt und somit erzeugt.

Der Erfindung liegt die Aufgabe zu Grunde, beliebige Folien mit höherer Leistung und Qualität verschweißen zu können.

Gelöst ist die Aufgabe gemäß dem kennzeichnenden Teil des Anspruchs 1. Danach wird ein Siegelzeitfaktor Kt beliebig einstellbar für unterschiedliche Beutellängen, vorzugsweise für jede Beutellänge vorgegeben, welcher ein Wert in einem offenen Intervall zwischen Null und Eins, vorzugsweise zwischen 0,1 und 0,8 ist, der beschreibt, welcher Zeitanteil prozentual von der Zykluszeit Tz für die Siegelzeit längs eines effektiven Siegelweges Zs bereitgestellt wird, und der durch die Gleichung Kt = ts/tz gebildet wird. Dabei werden die elektromagnetische Linearantriebe derart betrieben, dass der Siegeizeitfaktor Kt eingehalten wird.

Das vorgeschlagene Verfahren hat den Vorteil, dass für eine bestimmte Beutellänge, je nach Folientyp oder je nach Qualitätsanforderung an die Siegelnaht, der Siegelzeitfaktor beliebig, d. h. auf einen geeigneten oder optimalen Wert eingestellt wird. Dies kann z. B. durch Eintippen auf einem Display einer Verpackungsmaschine erfolgen. Wird ein Wert eingegeben, der geringfügig über Null liegt (unterster Extremfall), so erfolgt ein nur sehr kurzzeitig andauerndes Ansetzen der Schweißbacken an einem Folienschlauch, währenddessen sehr viel Zeit zum Zurücksetzen der Schweißbacke hin zum Ausführen eines nachfolgenden Schweißvorganges zur Verfügung steht. Dies bringt eine maximale Verpackungsleistung z. B. für den Fall, bei dem eine extrem dünne, schnell zu verschweißende Folie eines Folienschlauches quer zu dessen Transportrichtung verschweißt wird, und sehr kurze Beutel erzeugt werden. Wird dagegen ein Wert vorgewählt, der geringfügig unter Eins liegt, so ist die zur Verfügung stehende Siegelzeit fast so groß wie die Zykluszeit. Es steht sehr viel Zeit zur Verfügung, um z. B. eine besonders starke, aus vielen unterschiedlichen Schichten bestehende Folie sicher quer zur Folientransportrichtung zu verschweißen. Die restliche, vergleichsweise geringe Zeitdauer zum Beenden eines Zyklusses reicht dann noch aus, um die Schweißbacke auch bei sehr langen Beuteln wieder an den Anfang des Siegelweges zu setzen.

Sehr hohe Kt-Werte, z. B. Kt = 0,8, können auch für kurze Beutel erreicht werden. Wird bei kurzen Beuteln eine geringe Folientransportgeschwindigkeit gewählt, so ist dabei eine lange Siegelzeit möglich.

Eine entsprechende Ansteuerung der elektromagnetische Linearantriebe sorgt für die Umsetzung. Unter Realitätsbedingungen sind Werte von 0,1 bis 0,8 für den Siegelzeitfaktor dazu geeignet, die maximale Maschinenleistung zu erreichen. Der jeweils ideale Siegelzeitfaktor für einen Folientyp und eine bestimmte Beutellänge an einer bestimmten Verpackungsmaschine kann z. B. in Tabellenform bereitgestellt und vor einem neuen Verpackungsverfahren einer Maschinensteuerung eingegeben werden. Oder diese Steuerung enthält tabellarisch alle notwendigen Daten, und ruft sie ab, wenn lediglich der zu verarbeitende Folientyp und die gewünschte Beutellänge eingegeben werden.

Weitere, vorteilhafte Ausgestaltungen des vorgeschlagenen Verfahrens sind in den Ansprüchen 2 bis 5 beschrieben.

Das Verfahren ist besonders zum Betreiben einer vertikalen Schlauchbeutelmaschine geeignet, wobei die Schweißbacke einen Folienschlauch mittels Quernähten verschweißt, und mittels einer Trenneinrichtung jeweils ein Schlauchbeutel mit einer bestimmten Beutellänge vom Folienschlauch abgetrennt wird.

Eine besonders hohe Steigerung der Maschinenleistung (Beutel pro Minute) wird dabei erzielt, wenn gemäß Anspruch 3 bei vorgegebenem effektiven d. h. tatsächlichem Siegelweg Zseff mit zunehmender Beutellänge ein abnehmender Siegelzeitfaktor vorgesehen wird. In idealer Weise beschreibt dabei der funktionelle Zusammenhang zwischen der Beutellänge (x-Achse) und dem Siegelzeitfaktor (y-Achse) zumindest in einem Teilintervall des Bereichs von Null bis Eins eine Hyperbel. Wird gemäß Anspruch 4 bei vorgegebener Beutellänge und vorgegebenem effektiven Siegelweg (Zseff) ein Siegelzeitfaktor ausgewählt, z. B. aus einer Tabelle, oder durch eine Rechnereinheit an einer Verpackungsmaschine, so kann entsprechend eine maximale Maschinenleistung erzielt werden.

In vielen Fällen wird einer üblichen Praxis entsprochen, wenn gemäß Anspruch 5 der effektive Siegelweg (Zseff) Teil eines maschinentechnischen Siegelweges (Zs) ist, und sich der Siegelweg (Zs) aus einer Vorwärmstrecke (Zv) oder einer an sich bekannten Abstreifstrecke (Strippweg) für ein Vorwärmen oder Abstreifen (mittels einer Abstreifeinrichtung) des Gegenstandes mit vom Gegenstand beabstandeter Schweißbacke, dem eigentlichen, effektiven Siegelweg (Zseff) und wahlweise einer Kühlstrecke (Zk) zum Abkühlen des Gegenstandes bei vom Gegenstand beabstandeter Schweißbacke, währenddessen Kühlluft von einem an der Schweißbacke vorgesehenen Kühlluftauslass auf den Gegenstand geblasen wird, zusammensetzt. Für das vorgeschlagene Verfahren spielt es keine Rolle, wie genau der Siegelweg definiert ist. In jedem Fall wird eine Siegelzeit, die für den Siegelweg zur Verfügung gestellt wird, dazu genutzt, die Verschweißung auszuführen. Ob ein Teil dieses Siegelweges für eine Folienvorwärmung und, gegebenenfalls, eine weitere Strecke des Siegelweges für eine Nahtkühlung verwendet wird, spielt für die restliche, zum Zurücksetzen der Schweißbacke verbleibende Zykluszeit verfahrenstechnisch keine Rolle. Insgesamt werden jedoch bei Nutzung des maschinentechnischen Siegelweges an Stelle des effektiven Siegelweges die Siegelzeitfaktoren größer (niemais aber gleich Eins), wobei die Siegelzeit dann als Zeit für den maschinentechnischen Siegelweg definiert werden sollte (Anspruch 6). In analoger Weise kann auch eine sogenannte automatische Siegelzeit (bei konstanter Foliengeschwindigkeit) oder eine sogenannte Handsiegelzeit (manuell getestete Folienstauchung) in den Siegelzeitfaktor einfließen.

Im folgenden wird das vorgeschlagene Verfahren und eine nach dem vorgeschlagenen Verfahren betreibbare vertikale Schlauchbeutelmaschine an Hand von Ausführungsbeispiele darstellenden Figuren näher beschrieben. Es zeigt:
- Figur 1: in einer Seitenansicht eine vertikale Schlauchbeutelmaschine mit gegeneinander bewegbaren Schweißbacken einer Quersiegelstation;

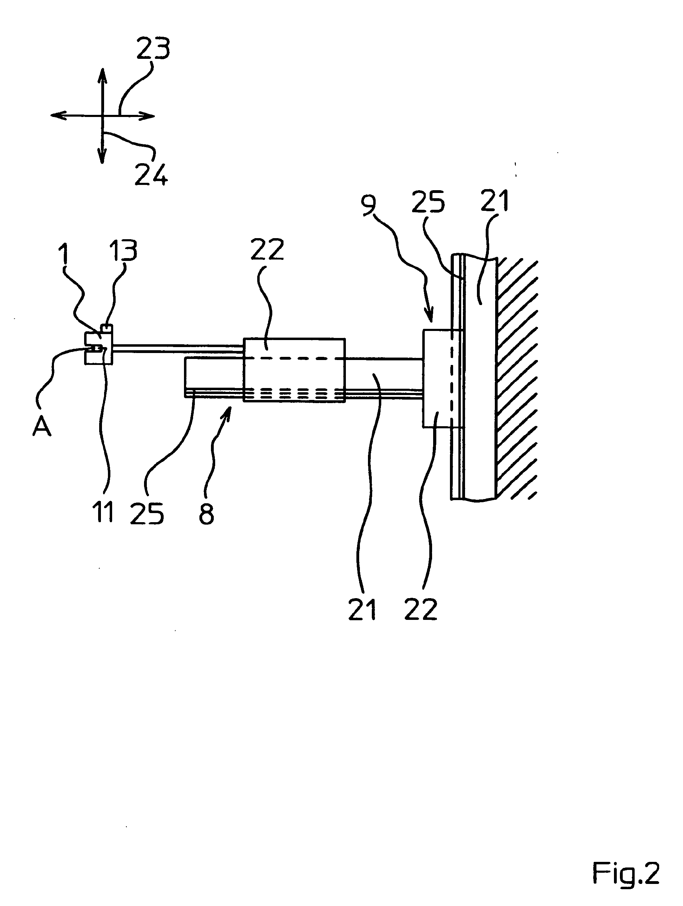

- Figur 2: in einer Seitenansicht zwei senkrecht zueinander wirkende Antriebe zum Bewegen eines Punktes A der einen Schweißbacke der Figur 1 entlang einer umlaufenden Bahn;
- Figur 3: in einer schematischen Darstellung den Umlauf zweier gegeneinander bewegbarer, entlang eines effektiven Siegelweges Zseff den Folienschlauch der Figur 1 verschweißenden Schweißbacken;
- Figur 4: in einer schematischen Darstellung den Schweißbackenumlauf entsprechend Figur 3, jedoch mit einem um eine Vorwärmstrecke und eine Kühlstrecke reduzierten effektiven Siegelweg;
- Figur 5: in einem Diagramm den funktionellen Zusammenhang zwischen einem beliebig innerhalb eines Intervalls vorwählbaren Siegelzeitfaktor und einer Beutellänge, bei zwei verschiedenen Siegelwegen, welcher Stand der Technik ist und mit dem vorgeschlagenen Verfahren realisierbar ist;
- Figur 6: in einem Diagramm ein funktioneller Zusammenhang zwischen Beutellängen und Siegelzeitfaktoren gemäß dem vorgeschlagenen Verfahren;
- Figur 7: in einem Diagramm ein funktioneller Zusammenhang zwischen Beutellängen und Siegelwegen bei wählbaren Kt-Werten gemäß dem vorgeschlagenen Verfahren;
- Figur 8: in einem Diagramm ein funktioneller Zusammenhang zwischen einer Taktzahl (Beutel pro Minute) und einer automatischen Siegelzeit bei zwei unterschiedlichen Kt-Werten, wobei zwischen der Abszisse, der Ordinate und den Kt-Graphen ein Arbeitsfeld zum Betreiben einer vertikalen Schlauchbeutelmaschine definiert wird, sowie
- Figur 9: in einem Diagramm ein funktioneller Zusammenhang analog dem in Figur 8 dargestelltem, jedoch mit einem anderen Arbeitsfeld für eine andere vertikale Schlauchbeutelmaschine, wobei das Arbeitsfeld zwischen einem Graphen für Kt = 0,17, einem Graphen für Kt = 0,5 und einem Graphen für Kt = 0,25 begrenzt wurde.

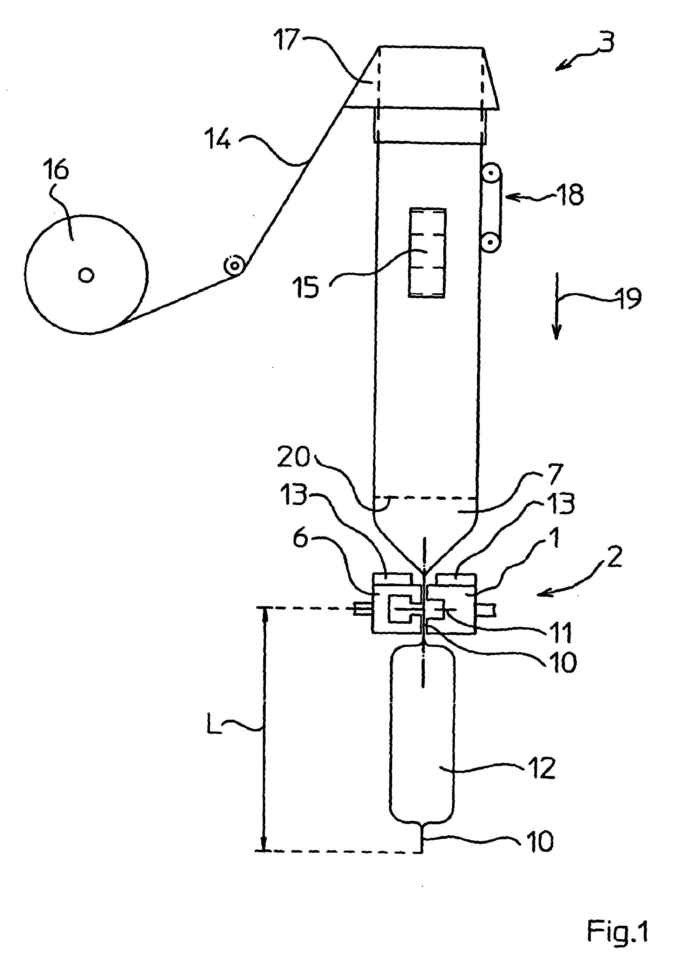

Bei einer vertikalen Schlauchbeutelmaschine 3 wird eine Folienbahn 14 mittels eines Abzuges 15 von einer Vorratsrolle 16 abgezogen, über eine Formschulter 17 gezogen und dabei zu einem Folienschlauch 7 geformt (Figur 1). Der Folienschlauch 7 wird mittels einer Längssiegeleinrichtung 18 in Transportrichtung 19 verschweißt und durch ein Füllrohr 20 befüllt. Zwei gegeneinander bewegbare, umlaufende Schweißbacken 1, 6 dienen dazu den Folienschlauch 7 quer zur Transportrichtung 19 mittels Quernähten 10 zu verschweißen. Eine Trenneinrichtung 11 in einer Schweißbacke 1 dient dazu, jeweils einen Schlauchbeutel 12 mit einer bestimmten Beutellänge L vom Folienschlauch 7 abzutrennen.

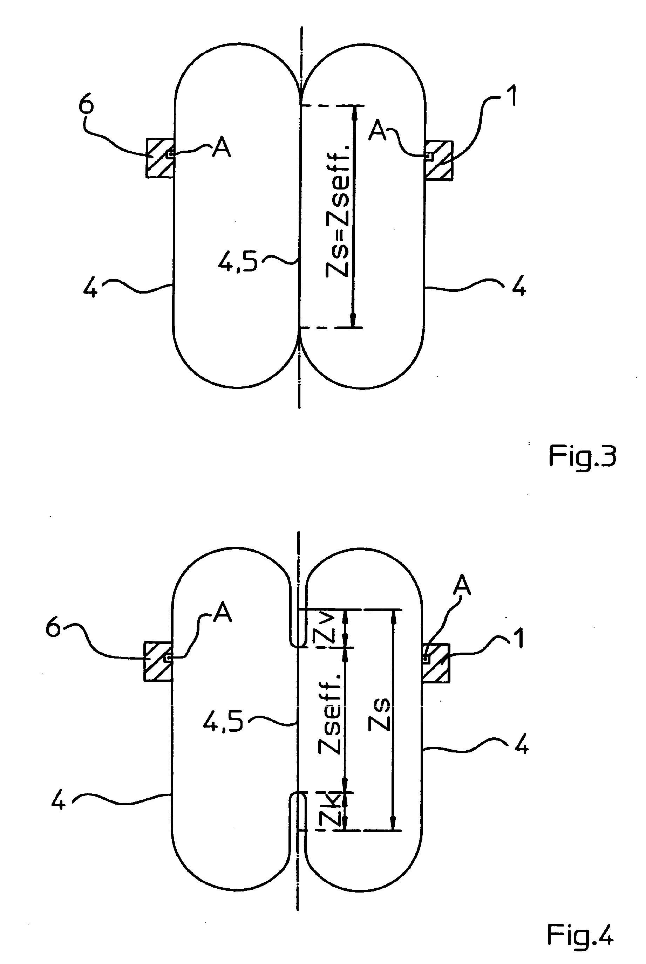

Die Schweißbacken 1, 6 werden derart betrieben, dass sie gegenläufig umlaufen, um längs eines effektiven Siegelweges Zseff die Verschweißung des mit gleicher Geschwindigkeit wie die Schweißbacken 1, 6 nach unten bewegten Folienschlauches 7 auszuführen (Figur 3). Beide Schweißbacken 1, 6 werden dazu jeweils mit einem Bewegungspunkt A entlang einer geschlossenen Bahn 4 bewegt. Jede Bahn 4 weist einen geraden Abschnitt 5 auf, welcher zum Anliegen an dem zwischen den Schweißbacken 1, 6 zusammengedrückten Folienschlauch 7 vorgesehen ist. Dabei werden der Folienschlauch 7 und die Schweißbacke 1 in Richtung des geraden Abschnittes 5 mit konstanter Geschwindigkeit weiterbewegt, um den Folienschlauch 7 durch die Wärmeeinwirkung der Schweißbacken 1, 6 innerhalb einer Siegelzeit ts zu verschweißen.

Es sind zwei als Linearantriebe mit jeweils einem antreibenden Teil 21 und einem beweglichen Teil 22 ausgestaltete, in zwei senkrecht zueinander verlaufende Richtungen 23, 24 wirkende, eine Schweißbacke 1 bewegende Antriebe 8, 9 vorgesehen, um einen Umlauf der Schweißbacke 1 innerhalb einer Zykluszeit tz zu erreichen. Analog dazu wird die zweite Schweißbacke 6 bewegt.

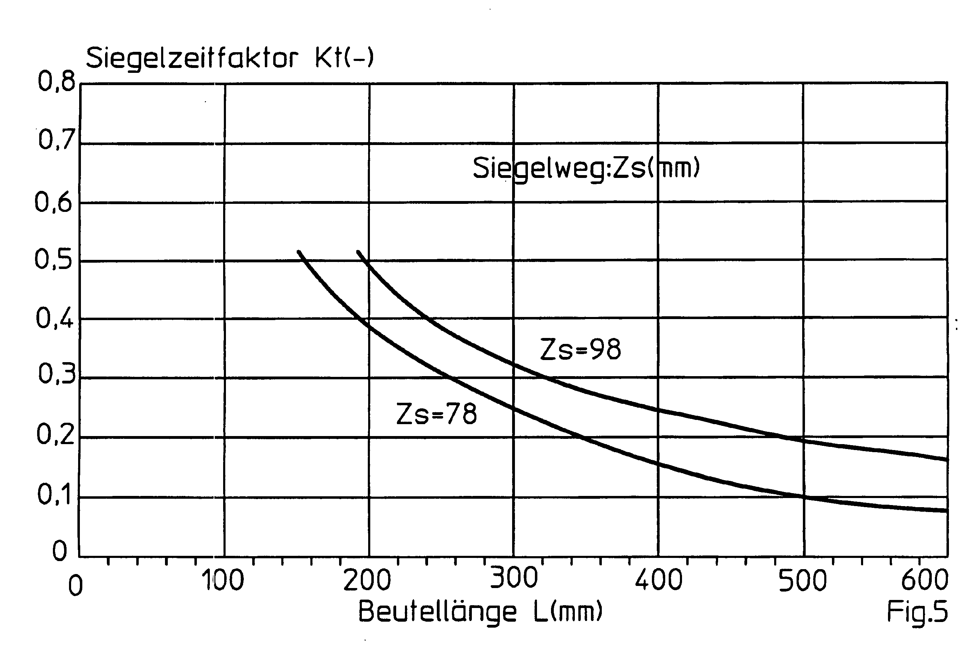

Vor dem Betreiben der Schlauchbeutelmaschine 3 wird in ein Display der Maschine ein Siegelzeitfaktor Kt beliebig einstellbar eingegeben, welcher ein Wert in einem offenen Intervall zwischen Null und Eins, vorzugsweise zwischen 0,1 und 0,8 ist. Dieser beschreibt, welcher Zeitanteil prozentual von der Zykluszeit tz für die Siegelzeit ts längs des effektiven Siegelweges Zseff bereitgestellt wird. Er wird durch die Gleichung Kt = ts/tz gebildet. Sodann werden die Antriebe 8, 9 auf Grund gespeicherter Werte derart betrieben, dass der Siegelzeitfaktor Kt eingehalten wird. Als gespeicherter Wert können ein Siegelweg Zs von 78 mm oder ein Siegelweg Zs von 98 mm vorgegeben werden (Figur 5). Der Siegelzeitfaktor Kt wird auf Grund eines bestimmten zu verarbeitenden Folientyps für einen Siegelweg Zs von 78 mm mit 0,5 ausgewählt. Folglich können relativ kurze Beutel, deren Länge L 180 mm betragen soll, deutlich schneller hergestellt werden, als bei einer herkömmlichen Schlauchbeutelmaschine, deren Siegelzeitfaktor Kt für alle Beutellängen L den Wert 0,3 hat. Sollten relativ lange Schlauchbeutel 12 mit einer Beutellänge L von 500 mm erzeugt werden, und ist als Siegelweg Zs eine Strecke von 98 mm vorgesehen, so wird ein Siegelzeitfaktor Kt von 0,2 eingestellt. Im Vergleich zu einer bekannten Technik, bei welcher Kt = 0,3 ist, wird nun Zeit für das Zurücksetzen der Schweißbacken 1,6 hin zu einem neuen Querverschweißungsvorgang am Folienschlauch 7 gewonnen. Dagegen war die Zeit zum Zurücksetzen beim kurzen Schlauchbeutel 12 vergleichsweise gering. In beiden Fällen (kurzer und langer Schlauchbeutel 12) wurde eine Leistungssteigerung der Schlauchbeutelmaschine 3 erreicht. Im ersten Fall (kurzer Beutel) wegen einer Verkürzung der Rücksetzzeit entlang des gebogenen Abschnitts der Bahn 4 und im zweiten Fall (langer Beutel) wegen einer Verlängerung dieses Abschnitts, tatsächlich aber wegen eines für die Beutellänge L vorgegebenen Siegelzeitfaktores Kt. Eine optimale Leistung (Beutel pro Minute) wird erreicht, wenn die Schlauchbeutelmaschine 3 immer so betrieben wird, dass bei vorgegebenem effektiven Siegweg Zseff mit zunehmender Beutellänge L ein abnehmender Siegelzeitfaktor Kt vorgesehen wird. Ansonsten würde der Rücksetzvorgang im Regelfall nicht schnell genug erfolgen und somit ein Zeitverlust (Leistungsverlust) vorkommen. Während bei diesem Ausführungsbeispiel bei vorgegebener Beutellänge L und vorgegebenem effektiven Siegelweg Zseff ein Siegelzeitfaktor Kt ausgewählt wird (Figur 4), könnte auch der effektive Siegelweg Zseff Teil eines maschinentechnischen Siegelweges Zs sein (Figur 5). Dann setzt sich der Siegelweg zs zusammen aus einer Vorwärmstrecke Zv für ein Vorwärmen des Folienschlauches 7 mit vom Folienschlauch 7 beabstandeten Schweißbacken 1, 6, dem eigentlichen, effektiven Siegelweg Zseff und wahlweise einer Kühlstrecke Zk zum Abkühlen des Folienschlauches 7 bei vom Folienschlauch 7 beabstandeten Schweißbacken 1, 6, währenddessen Kühlluft von jeweils einem an den Schweißbacken 1, 6 vorgesehenen Kühlluftauslass 13 auf den Folienschlauch 7 geblasen wird. Dabei ist die Siegelzeit ts als Zeit für den maschinentechnischen Siegelweg Zs definiert.

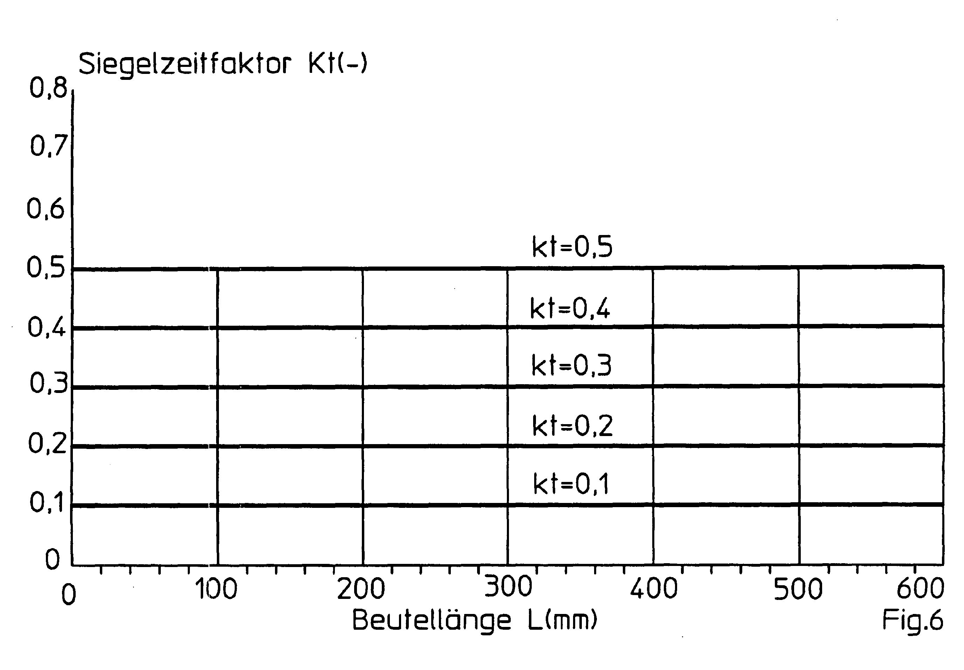

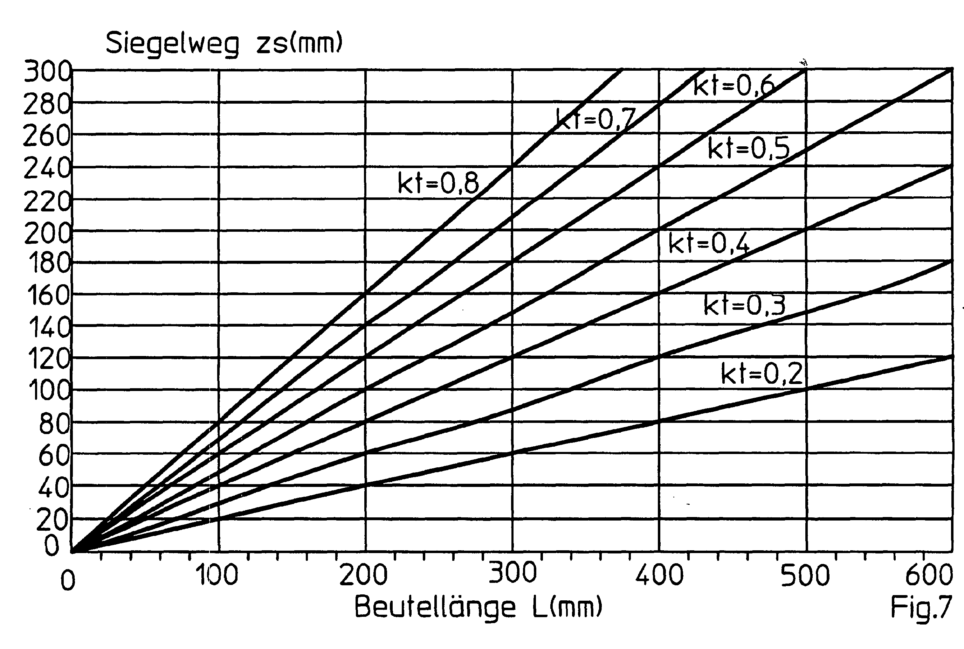

Mit dem erfindungsgemäßen Verfahren kann ein konstanter Siegelzeitfakt Kt unabhängig von der Beutellänge L vorgewählt werden (Figur 6). Zudem können relativ hohe Siegelzeitfaktoren Kt erzielt werden. Je höher der Kt-Wert ist (Figur 7), umso längere Siegelwege Zs stehen zur Verfügung. So kann z. B. bei einer Beutellänge L von 300 mm statt einem (beim bekannten Stand der Technik maximal erreichten) Kt-Wert von 0,35 der Kt-Wert auf 0,8 erhöht werden. Dadurch stehen statt ca. 110 mm Siegelweg Zs deutlich höhere 240 mm Siegelweg Zs zur Verfügung.

Die beiden Antriebe 8, 9 sind elektromagnetische Linearantriebe. Sie funktionieren als Linearmotore. Ihre beweglichen Teile 22 schweben nach dem Magnetschwebeprinzip entlang den antreibenden Teilen 21. Dabei wird jeweils ein bewegliches Teil 22 eines Antriebes 8, 9 entlang einer Führung 25 des antreibenden Teils 22 des Antriebs 8, 9 geführt. Durch eine Überlagerung der Bewegungen der Antriebe 8, 9, welche in senkrecht zueinander verlaufende Richtungen 23, 24 bewegt werden, können alle Positionen des Bewegungspunktes A auf der geschlossenen Bahn 4 erzeugt werden. Ebenso kann die Bahn 4 entsprechend abgeändert werden.

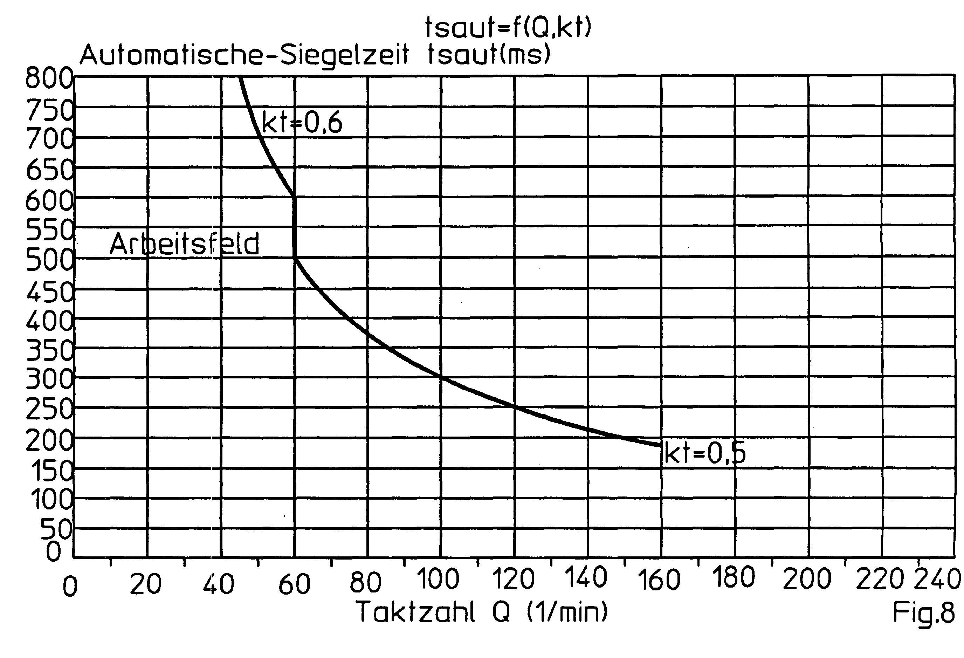

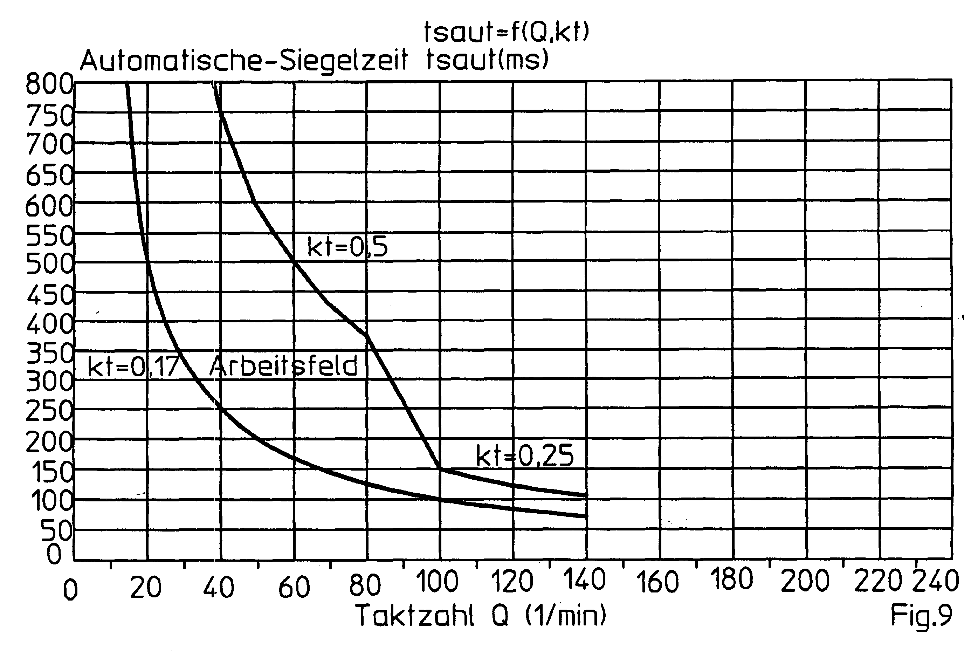

Die vorgeschlagene Schlauchbeutelmaschine 3 ist innerhalb von Arbeitsfeldern (Figur 8, Figur 9) betreibbar, wobei für jeweils eine Taktzahl Q eine automatische Siegelzeit ts aut wählbar ist. Dabei bestimmen festlegbare Kt-Werte die Grenzen dieses Arbeitsfeldes. In Figur 8 sind danach 160 Beutel pro Minute bei Kt = 0,5 erreichbar, wobei maximal 190 ms (Millisekunden) für die automatische Siegelzeit zur Verfügung stehen. Sehr lange Siegelzeiten können durch eine Erhöhung des Kt-Wertes von 0,5 auf 0,6 erreicht werden. Die dadurch mögliche, sprunghafte Siegelzeiterhöhung erlaubt es z. B. bei einer Taktzahl von 60 Beuteln pro Minute die automatische Siegelzeit von 500 auf 600 msec zu erhöhen, um derart auch relativ dicke Folien sicher verschweißen zu können. Der Maschinentyp ist für eine Herstellung von bis zu 160 Beuteln pro Minute ausgelegt.

Bei einem anderen Maschinentyp (Figur 9) werden maximal 140 Beutel pro Minute hergestellt. Das Arbeitsfeld wird von drei Graphen für Kt = 0,17, Kt = 0,25 und Kt = 0,5 begrenzt. Kt = 0,25 entspricht z. B. einer herkömmlichen Betriebsweise. Durch eine Erhöhung auf Kt = 0,5 werden bei Taktzahlen von 40 bis fast 100 Beutel pro Minute deutlich höhere Siegelzeiten tsaut als bisher bekannt, erreicht. Eine deutlich längere Siegelzeit tsaut als 800 ms (0,8 sec) ist auch bei diesem Maschinentyp nicht vorgesehen.

## Patentansprüche

1. Verfahren zum Bewegen einer Schweißbacke (1, 6), insbesondere einer Schweißbacke (1, 6) einer Quersiegelstation (2) einer vertikalen Schlauchbeutelmaschine (3), wobei die Schweißbacke (1, 6) entlang einer geschlossenen Bahn (4) bewegt wird, und die Bahn (4) einen geraden Abschnitt (5) aufweist, welcher zum Anliegen an einem zu verschweißenden Gegenstand, insbesondere einem zwischen der Schweißbacke (1) und einer zweiten, gegenläufigen Schweißbacke (6) zusammengedrückten Folienschlauches (7), vorgesehen ist, wobei der Gegenstand und die Schweißbacke (1, 6) in Richtung des geraden Abschnittes (5) mit gleicher Geschwindigkeit weiterbewegt werden, um den Gegenstand durch die Wärmeeinwirkung der Schweißbacke (1, 6) innerhalb einer Siegelzeit (ts) zu verschweißen, und wobei zwei in senkrecht zueinander verlaufende Richtungen (23, 24) wirkende, die Schweißbacke (1, 6) bewegende Antriebe (8, 9) betrieben werden, um einen Umlauf der Schweißbacke (1, 6) innerhalb einer Zykluszeit (tz) zu erreichen, **dadurch gekennzeichnet, dass** ein Siegelzeitfaktor (Kt) beliebig einstellbar für unterschiedliche Beutellängen (L), vorzugsweise für jede Beutellänge (L) vorgegeben wird, welcher ein Wert in einem offenen Intervall zwischen Null und Eins, vorzugsweise zwischen 0,1 und 0,8 ist, der beschreibt, welcher Zeitanteil prozentual von der Zykluszeit (tz) für die Siegelzeit (ts) längs eines effektiven Siegelweges (Zseff) bereitgestellt wird, und der durch die Gleichung Kt = ts/tz gebildet wird, und dass die Antriebe (8, 9), die zum Bewegen der Schweißbacke (1) als elektromagnetische Linearantriebe, die nach dem Schwebebahnprinzip funktionieren, ausgestaltet sind, derart betrieben werden, dass der Siegelzeitfaktor (Kt) eingehalten wird.

2. Verfahren nach Anspruch 1, **dadurch gekennzeichnet, dass** bei vorgegebenem effektiven Siegelweg (Zseff) mit zunehmender Beutellänge (L) ein abnehmender Siegelzeitfaktor (Kt) vorgesehen wird.

3. Verfahren nach Anspruch 1, **dadurch gekennzeichnet, dass** bei vorgegebener Beutellänge (L) und vorgegebenem effektiven Siegelweg (Zseff) ein Siegelzeitfaktor (Kt) ausgewählt wird.

4. Verfahren nach einem der Ansprüche 1 bis 3, **dadurch gekennzeichnet, dass** der effektive Siegelweg (Zseff) Teil eines maschinentechnischen Siegelweges (Zs) ist, und sich der Siegelweg (Zs) aus einer Vorwärmstrecke (Zv) für ein Vorwärmen des Gegenstandes oder einer Abstreifstrecke zum Abstreifen des Gegenstandes mit vom Gegenstand beabstandeter Schweißbacke (1), dem eigentlichen, effektiven Siegelweg (Zseff) und wahlweise einer Kühlstrecke (Zk) zum Abkühlen des Gegenstandes bei vom Gegenstand beabstandeter Schweißbacke (1), währenddessen Kühlluft von einem an der Schweißbacke (1) vorgesehenen Kühlluftauslass (13) auf den Gegenstand geblasen wird, zusammensetzt.

5. Verfahren nach Anspruch 4, **dadurch gekennzeichnet, dass** die Siegelzeit (ts) als Zeit für den maschinentechnischen Siegelweg (Zs) definiert wird.

## Claims

1. A method of moving a welding jaw (1, 6), in particular a welding jaw (1, 6) of a transverse sealing station (2) of a vertical bag-forming, -filling and -sealing machine (3), wherein the welding jaw (1, 6) is moved along a closed path (4), and the path (4) has a straight portion (5) which is provided for resting against an article to be welded, in particular a film tubing (7) compressed between the welding jaw (1) and a second welding jaw (6) moving in the opposite direction, wherein the article and the welding jaw (1, 6) are moved further at the same speed in the direction of the straight portion (5) in order to weld the article by the action of the heat of the welding jaw (1, 6) within a sealing time **(ts),** and wherein two drives (8, 9) moving the welding jaw (1, 6) and acting in directions (23, 24) extending at a right angle to each other are operated in order to effect a revolution of the welding jaw (1, 6) within a cycle time **(tz), characterized in that** a sealing-time factor **(Kt)** is pre-set in a manner capable of being set in any desired manner for different bag lengths **(L),** preferably for any bag length **(L),** the said sealing-time factor **(Kt)** being a figure in an open interval between zero and one, preferably between 0·1 and 0·8, which describes which time portion is provided in terms of percentage by the cycle time **(tz)** for the sealing time **(ts)** along an effective sealing path **(Zseff)** and which is formed by the equation **Kt = ts / tz,** and the drives (8, 9), which in order to move the welding jaw (1) are designed in the form of electromagnetic linear drives which function in accordance with the suspension-railway principle, are operated in such a way that the sealing-time factor **(Kt)** is observed.

2. A method according to Claim 1, **characterized in that** a decreasing sealing-time factor **(Kt)** is provided when the effective sealing path **(Zseff)** is pre-set and when the bag length **(L)** increases.

3. A method according to Claim 1, **characterized in that** a sealing-time factor **(Kt)** is selected when the bag length **(L)** and the effective sealing path **(Zseff)** are pre-set.

4. A method according to any one of Claims 1 to 3, **characterized in that** the effective sealing path **(Zseff)** is part of a technical sealing path **(Zs),** and the sealing path **(Zs)** is formed from a pre-heating stretch **(Zv)** for pre-heating the article or from a wiping stretch for wiping off the article with a welding jaw (1) situated at a distance from the article, the actual effective sealing path **(Zseff)** and optionally a cooling stretch **(Zk)** for cooling the article when the welding jaw (1) is situated at a distance from the article, during which cooling air is blown onto the article from a cooling-air outlet (13) provided on the welding jaw (1).

5. A method according to Claim 4, **characterized in that** the sealing time **(ts)** is defined as the time for the technical sealing path **(Zs)**.

## Revendications

1. Procédé pour déplacer une machoire de soudure, notamment une machoire de soudure (1, 6) d'un poste de scellement transversal (2) dans une machine à fabriquer des sachets tubulaires (3), la machoire de soudure (1, 6) étant déplacée le long d'une piste fermée (4) et cette piste (4) possédant une section en ligne droite (5) qui est prévue pour s'appuyer sur un objet à souder, notamment une feuille tubulaire (7) serré entre la machoire de soudure (1, 6) et une seconde machoire de soudure (6) se déplaçant dans le sens opposé, l'objet et la machoire de soudure (1,6) étant déplacés à la même vitesse dans la direction la section en ligne droite (5) afin de souder l'objet par l'effet de la chaleur de la machoire (1,6) durant un temps de scellage (ts) et deux entrainements (8,9), agissant dans deux directions (23, 24) perpendiculaires l'une à l'autre et déplaçant les machoires de soudure (1, 6), étant mis en oeuvre pour obtenir une rotation des machoires de soudure (1, 6) le temps d'un cycle, **caractérisé en ce qu'**un facteur de temps de scellement (Kt), pouvant être réglé à volonté pour différentes longueurs de sachets (L), de préférence pour chaque longueur de sachet (L), est prédéterminé, qui est une valeur dans l'intervalle ouvert entre zéro et un, de préférence entre 0,1 et 0,8, qui définit quelle partie de temps, en pourcentage du temps de cycle (tz), est disponible pour le temps de scellage (ts) le long d'un trajet de scellage effectif (Zseff) et qui est fourni par l'équation kt = ts/tz et **en ce que** les entrainements (8, 9) qui, pour déplacer la machoire de soudure (1), sont configurés comme entrainements linéaires électromagnétiques fonctionnant selon le principe du train suspendu, sont entrainés de telle façon que le facteur de temps de scellement (kt) soit déclenché.

2. Procédé selon la revendication 1, **caractérisé en ce que** pour un trajet de scellement effectif (Zseff) donné avec une longueur de sachet (L) croissante, il est prévu un décroissant.

3. Procédé selon la revendication 1, **caractérisé en ce qu'**un facteur de temps de scellement (kt) est choisi pour une longueur de sachet (L) et un trajet de scellement effectif (Zseff) donnés.

4. Procédé selon les revendications 1 à 3, **caractérisé en ce que** le trajet de scellement effectif (Zseff) est une partie d'un trajet de scellement (Zs) de la technique des machines et que le trajet de scellement (Zs) est constitué d'un trajet de préchauffage (Zv) pour le préchauffage de l'objet ou d'un trajet de raclage pour racler l'objet au moyen de la machoire de soudure (1), du trajet de scellement effectif (Zseff) proprement dit et au choix un trajet de refroidissement (Zk) pour refroidir l'objet lorsque la machoire de soudage (1) est éloignée de l'objet pendant lequel de l'air de refroidissement est soufflé sur l'objet depuis un orifice de sortie d'air de refroidissement (13).

5. Procédé selon la revendication 4, **caractérisé en ce que** le temps de scellement (ts) est défini comme le temps du trajet de scellement (Zs) de la technique des machines.
